# EUROPÄISCHE PATENTSCHRIFT

(11) **EP 0 697 103 B1**
(45) Veröffentlichungstag und Bekanntmachung des Hinweises auf die Patenterteilung: **09.02.2000**
(21) Anmeldenummer: 95910554.5
(22) Anmeldetag: 05.03.1995
(51) Int. Cl.: G01L 19/00

(54) **VENTILBATTERIE ALS ANSCHLUSSBAUGRUPPE FÜR DIFFERENZDRUCK-MESSUMFORMER**
VALVE BATTERY USEFUL AS CONNECTING MODULE FOR DIFFERENTIAL PRESSURE MEASUREMENT TRANSDUCERS
BATTERIE DE SOUPAPES UTILE COMME MODULE DE RACCORDEMENT POUR TRANSDUCTEURS DE MESURE DE LA PRESSION DIFFERENTIELLE

(30) Priorität: 08.03.1994 DE 4407609
(43) Veröffentlichungstag der Anmeldung: 21.02.1996
(73) Patentinhaber: Endress + Hauser GmbH + Co., 79689 Maulburg (DE)
(72) Erfinder: SHINOWSKY, Helmer, D-14979 Grossbeeren (DE)
(74) Vertreter: Morstadt, Volker, Dipl.-Ing.
(86) Internationale Anmeldenummer: EP9500811
(87) Internationale Veröffentlichungsnummer: WO9524625

(56) Entgegenhaltungen:
- US-A- 3 381 532
- US-A- 3 431 935

## Beschreibung

Die Erfindung betrifft eine Ventilbatterie als Anschlußbaugruppe für Differenzdruck-Meßumformer.

In der US-A 34 31 935 ist eine als Anschlußbaugruppe für einen Differenzdruck-Meßumformer dienende Ventilbatterie beschrieben mit
- einem ersten Einlaßanschluß für einen hohen Druck und einem zweiten Einlaßanschluß für einen niedrigen Druck,
- einem ersten und einem zweiten Auslaßanschluß zum Anschluß an den Differenzdruck-Meßumformer,
- einer ersten Kammer mit einer darin angeordneten ventilartigen ersten Absperreinrichtung,
   -- die in einer ersten Endlage den ersten Einlaßanschluß dicht absperrt,
- einer zweiten Kammer mit einer darin angeordneten ventilartigen zweiten Absperreinrichtung,
   -- die in einer zweiten Endlage den zweiten Einlaßanschluß dicht absperrt,
- einem die erste Kammer mit dem ersten Auslaßanschluß verbindenden ersten Kanal,
- einem die zweite Kammer mit dem zweiten Auslaßanschluß verbindenden zweiten Kanal und
- einem die erste Kammer mit dem zweiten Auslaßanschluß verbindenden dritten Kanal,
   -- der in einer dritten Endlage der ersten Absperrvorrichtung dicht abgesperrt wird.

Bei dieser vorbeschriebenen Vorrichtung steht die zweite Kammer mit dem zweiten Kanal dauernd in Verbindung, da die zweite Absperrvorrichtung nur die den zweiten Einlaßanschluß dicht absperrende Endlage aufweist. Somit führt bei dieser Vorrichtung ein vertauschtes Anlegen des niederen bzw. hohen Drucks an den zweiten bzw. ersten Einlaßanschluß zu einer Fehlfunktion.

Andererseits werden Differenzdruck-Meßumformer üblicherweise über eine Dreifach-Ventilbatterie an eine Differenzdruck-Quelle angeschlossen. Die Dreifach-Ventilbatterie hat drei Funktionen zu realisieren. Erstens sperrt sie die Zufuhr des Differenzdruckes, um beispielsweise den Austausch eines defekten Differenzdruck-Meßumformers zu ermöglichen; zweitens gewährleistet die Dreifach-Ventilbatterie, daß bei der Inbetriebnahme der Anlage der Differenzdruck-Meßumformer, insb. dessen Meßzelle, nicht einseitig mit dem in der Regel sehr hohen statischen Druck beaufschlagt wird; und drittens dient die Dreifach-Ventilbatterie der Realisierung eines Kurzschlusses durch Beaufschlagung beider Eingänge des Differenzdruck-Meßumformers mit demselben Druck, um eine Nullpunkt-Einstellung vornehmen zu können.

Die üblicherweise eingesetzten Dreifach-Ventilbatterien weisen zwei Einlaßanschlüsse zum Anschluß an die Differenzdruck-Quelle und zwei Auslaßanschlüsse zum Anschluß an den Differenzdruck-Meßumformer auf. Die beiden Auslaßanschlüsse sind über einen Kurzschlußkanal miteinander verbunden. Eine solche Dreifach-Ventilbatterie enthält drei Einfachventile, von denen ein erstes Einlaßventil und ein zweites Einlaßventil die beiden Einlaßanschlüsse absperrt und ein drittes Ventil im Kurzschlußkanal angeordnet ist.

Nachteilig an dieser Dreifach-Ventilbatterie ist, daß bei der Inbetriebnahme eine bestimmte Reihenfolge der Betätigung der drei Ventile unbedingt eingehalten werden muß. Denn nur dann, wenn zuerst das dritte Ventil im Kurzschlußkanal geöffnet wird, ist gewährleistet, daß bei Öffnung eines der beiden Einlaßventile der jeweils am betreffenden Einlaßanschluß liegende Druck gleichzeitig zu beiden Eingängen des Differenzdruck-Meßumformers gelangt. Nachdem beide Einlaßventile geöffnet sind, werden das dritte Ventil im Kurzschlußkanal geschlossen und der Meßzustand hergestellt.

Wird infolge einer Fehlbedienung zuerst eines der beiden Einlaßventile geöffnet, so wird der Differenzdruck-Meßumformer mit dem vollen statischen Druck einseitig beaufschlagt und nur dann nicht zerstört, wenn er durch einen hochwirksamen Überlastschutz geschützt ist. Nachteilig bleibt in letzterem Fall dennoch, daß gewöhnlich ein (erneuter) Nullpunktabgleich nicht zu vermeiden ist.

ln vielen praktischen Anwendungsfällen kann der Forderung nach ausreichender Überlastsicherheit des Differenzdruck-Meßumformers durch die alleinige Überlastsicherheit der Meßzelle vollständig entsprochen werden. In diesen Fällen gründet sich die allgemein übliche Forderung nach einer erheblichen Überlastsicherheit, nämlich bis zum vollen statischen Druck, allein auf die oben erläuterten Bedienungsfehler der Dreifach-Ventilbatterie. Es sind daher komplizierte und aufwendige Überlastschutzeinrichtungen erforderlich, welche die Kosten des Differenzdruck-Meßumformers unnötig erhöhen.

Demzufolge liegt der Erfindung die Aufgabe zugrunde, eine Ventilbatterie anzugeben, die die gleichen Funktionen erfüllt wie die üblichen Dreifach-Ventilbatterien mit drei Einfachventilen und die die oben erwähnten Bedienungsfehler nicht zuläßt, also fehlbedienungssicher ist. Die in Anspruch 1 definierte Erfindung dient der Lösung dieser Aufgabe. Eine vorteilhafte Ausgestaltung der Erfindung ist im abhängigen Anspruch definiert.

Ein Vorteil der Erfindung ist, daß in Gegensatz zur üblichen Dreifach-Ventilbatterie nur noch zwei Absperreinrichtungen erforderlich sind, die jedoch vier Absperrfunktionen erfüllen. Dadurch sind keine Fehlbedienungen mehr möglich. Es ist völlig ohne Belang, welche der beiden Absperreinrichtungen bei der Inbetriebnahme zuerst geöffnet wird. In jedem Fall werden beide Eingänge des Differenzdruck-Meßumformers mit demselben Druck beaufschlagt. Eine einseitige Überlastung, wie sie bei der üblichen Dreifach-Ventilbatterie auftreten kann, wenn das Einfachventil in der Kurzschlußstrecke nicht zuerst geöffnet wird, ist ausgeschlossen.

Als Absperreinrichtungen kommen beliebige ventilartige Einrichtungen nach den Stand der Technik in Betracht, welche die in Anspruch 1 angegebenen Wirkungen zu realisieren in der Lage sind, insb. eine Ausführungsform nach Art eines Dreiwegeventils mit kegelstumpf-förmigen Dichtflächen entsprechend Anspruch 2.

Wesentlich für den Einsatz der Ventilbatterie zusammen mit einen Differenzdruck-Meßumformer ohne speziellen Überlastschutz ist eine konstruktive Gestaltung der Absperreinrichtungen, die gewährleistet, daß bei deren Öffnen das den Druck übertragende Medium ausreichend langsam in Einlaßkammern des Differenzdruck-Meßumformers einströmt und somit auch kurzzeitige Überlastungen durch starke Druckstöße vermieden werden.

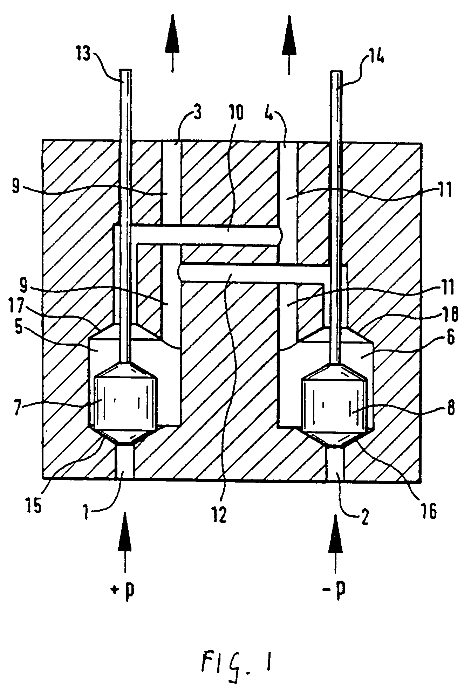

Die Erfindung wird nun anhand eines in der einzigen Figur der Zeichnung dargestellten Ausführungsbeispiels näher erläutert, die schematisch im Schnitt eine Ventilbatterie mit zwei Absperreinrichtungen zeigt.

Die Ventilbatterie besteht aus einem geeigneten Material, z.B. einem Metall. Auf ihrer einen Seite, die einer nicht dargestellten Differenzdruck-Quelle zugewandt ist, hat sie einen ersten und einen zweiten Einlaßanschluß 1, 2, und auf ihrer gegenüberliegenden Seite, die einem ebenfalls nicht dargestellten Differenzdruck-Meßumformer zugewandt ist, hat sie einen ersten und einen zweiten Auslaßanschluß 3, 4.

Der erste Einlaßanschluß 1 ist mit dem hochdruckseitigen Anschluß +p und der zweite Einlaßanschluß 2 mit dem niederdruckseitigen Anschluß -p der Differenzdruck-Quelle, Z.B. einer Blende, verbunden. In entsprechender Weise ist der erste Auslaßanschluß 3 mit dem hochdruckseitigen und der zweite Auslaßanschluß 4 mit dem niederdruckseitigen Anschluß des Differenzdruck-Meßumformers verbunden. Eine Vertauschung von Hoch- und Niederdruckseite ist aufgrund der symmetrischen Bauweise der Ventilbatterie unschädlich.

Die Einlaßanschlüsse 1, 2 führen in eine erste bzw. in eine zweite Kammer 5, 6. Die erste Kammer 5 steht über einen ersten Kanal 9 mit dem ersten Auslaßanschluß 3 und über einen zweiten Kanal 10 mit dem zweiten Auslaßanschluß 4 in Verbindung. Die zweite Kammer 6 steht über einen dritten Kanal 11 mit dem zweiten Auslaßanschluß 4 und über einen vierten Kanal 12 mit dem ersten Auslaßanschluß 3 in Verbindung. Somit ist jede Kammer 5, 6 auch mit der jeweils anderen Druckseite verbunden.

In jeder Kammer ist eine ventilartige Absperreinrichtung 7, 8 angeordnet, die zwischen einer ersten und einer dritten bzw. einer zweiten und einer vierten Endlage 15, 17 bzw. 16, 18 mittels einer jeweiligen drehbaren Spindel. 13, 14 bewegbar ist. In der ersten und der zweiten Endlage 15, 16 dichten die Absperreinrichtungen 7, 8 die Kammern 5, 6 gegenüber der Differenzdruck-Quelle hermetisch ab, in welcher Absperrlage die Absperreinrichtungen in der Figur dargestellt sind. In der dritten und der vierten Endlage 17, 18 dichten die Absperreinrichtungen 7, 8 die Kammern 5, 6 gegenüber dem Differenzdruck-Meßumformer hermetisch ab.

Dies allerdings derart, daß die erste Absperreinrichtung 7 den zweiten Kanal 10 und somit den zweiten Auslaßanschluß 4 von der ersten Kammer 5 abtrennt und vice versa die zweite Absperreinrichtung 8 den vierten Kanal 12 und somit den ersten Auslaßanschluß 3 von der zweiten Kammer 6. Es werden also von den Kanälen 10, 12 realisierte Über-Kreuz-Verbindungen gesperrt.

Zur Gewährleistung einer zuverlässigen Abdichtung sind die Endlagen 15, 16, 17, 18 bevorzugt als kegelstumpf-förmige Dichtflächen ausgebildet, an die entsprechend gestaltete kegelstumpf-förmige Dichtflächen der Absperreinrichtungen angepaßt sind.

Die Funktionsweise der Ventilbatterie entsprechend der Erfindung ist wie folgt. Befinden sich die beiden Absperreinrichtungen 7, 8 in den dargestellten Endlagen 15, 16, so ist der Differenzdruck-Meßumformer von der Differenzdruck-Quelle getrennt und kann, z.B. für Instandhaltungsarbeiten oder zu seinem Austausch, entfernt werden. Auch können in dieser Stellung der Absperreinrichtungen 7, 8 Reparaturarbeiten an einer Anlage vorgenommen werden, in die die Ventilbatterie und der Differenzdruck-Meßumformer eingebaut sind.

Werden bei der ersten Inbetriebnahme oder nach Abschluß derartiger Arbeiten die Absperreinrichtungen 7, 8 in beliebiger Reihenfolge durch Drehen der entsprechenden Spindel 13, 14 geöffnet, so strömt das den Druck übertragende Medium über die Kammer 5 bzw. 6, die Kanäle 9 bzw. 11 und 10 bzw. 12 zu den Auslaßsanschlüssen 3, 4, und es gelangt in beide Einlaßkammern des Differenzdruck-Meßumformers.

Wie auch immer die Bedienung der Ventilbatterie erfolgt, die Möglichkeit einer einseitigen, u.U. zerstörenden Druckbeaufschlagung des Differenzdruck-Meßumformers ist in jedem Fall ausgeschlossen.

Ist die eine Absperreinrichtung, z.B. 7, geöffnet, d.h. in einer Stellung zwischen ihren beiden Endlagen 15, 17, und die andere Absperreinrichtung, also 8, noch in der Endlage 16, so ist ein Ventilzustand erreicht, in dem z.B. ein Nullpunktabgleich des Differenzdruck-Meßumformers vorgenommen werden kann, da derselbe Druck auf dessen beide Seiten einwirkt.

Durch weiteres Drehen der Spindeln 13, 14 gelangen die Absperreinrichtungen 7, 8 in ihre Endlagen 17, 18, in denen nun die beiden Kanäle 10, 12 dicht verschlossen sind. In dieser Stellung ist der normale Meßzustand mit einer Druckübertragung von den Einlaßanschlüssen 1, 2 zu den Auslaßanschlüssen 3, 4 (wieder) hergestellt.

## Patentansprüche

1. Als Anschlußbaugruppe für einen Differenzdruck-Meßumformer dienende Ventilbatterie mit
- einem ersten und einem zweiten Einlaßanschluß (1, 2) zum Anschluß an eine Differenzdruck-Quelle (+p, -p),
- einem ersten und einem zweiten Auslaßanschluß (3, 4) zum Anschluß an den Differenzdruck-Meßumformer,
- einer ersten Kammer (5) mit einer darin angeordneten ventilartigen ersten Absperreinrichtung (7),
-- die in einer ersten Endlage (15) den ersten Einlaßanschluß (1) dicht absperrt,
- einer zweiten Kammer (6) mit einer darin angeordneten ventilartigen zweiten Absperreinrichtung (8),
-- die in einer zweiten Endlage (16) den zweiten Einlaßanschluß (2) dicht absperrt,
- einem die erste Kammer (5) mit dem ersten Auslaßanschluß (3) verbindenden ersten Kanal (9),
- einem die erste Kammer (5) mit dem zweiten Auslaßanschluß (4) verbindenden zweiten Kanal (10),
-- der in einer dritten Endlage (17) der ersten Absperrvorrichtung (7) dicht abgesperrt wird,
- einem die zweite Kammer (6) mit dem zweiten Auslaßanschluß (4) verbindenden dritten Kanal (11),
- einem die zweite Kammer (6) mit dem ersten Auslaßanschluß (3) verbindenden vierten Kanal (12),
-- der in einer vierten Endlage (18) der zweiten Absperrvorrichtung (8) dicht abgesperrt wird.

2. Ventilbatterie nach Anspruch 1, bei der die Endlagen (15, 16, 17, 18) jeweils als kegelstumpf-förmige Dichtflächen ausgebildet sind, in die entsprechend geformte kegelstumpf-förmige Dichtflächen der Absperreinrichtungen (7, 8) passen.

## Claims

1. A valve device assembly serving as a connection unit for a differential pressure transducer, comprising:
- a first inlet-end connection (1) and a second inlet-end connection (2) for connection to a differential pressure source (+p, -p);
- a first outlet-end connection (3) and a second outlet-end connection (4) for connection to the differential pressure transducer;
- a first chamber (5) with a valvelike first shutoff device (7) disposed therein,
-- the first shutoff device closing the first inlet-end connection (1) in a first end position (15);
- a second chamber (6) with a valvelike second shutoff device (8) disposed therein,
-- the second shutoff device closing the second inlet-end connection (2) in a second end position (16);
- a first passage (9) connecting the first chamber (5) with the first outlet-end connection (3);
- a second passage (10) connecting the first chamber (5) with the second outlet-end connection (4),
-- the second passage being closed in a third end position (17) of the first shutoff device (7);
- a third passage (11) connecting the second chamber (6) with the second outlet-end connection (4);
- a fourth passage (12) connecting the second chamber (6) with the first outlet-end connection (3),
-- the fourth passage being closed in a fourth end position (18) of the second shutoff device (8).

2. A valve device assembly as claimed in claim 1 wherein the end positions (15, 16, 17, 18) are determined by respective truncated-cone-shaped sealing surfaces which fit corresponding truncated-cone-shaped sealing surfaces of the shutoff devices (7, 8).

## Revendications

1. Batterie de soupapes servant de groupe de raccordement pour un convertisseur de mesure de pression différentielle comprenant :
- un premier et un second raccord d'entrée (1, 2) pour le raccordement à une source de pression différentielle (+p, p),
- un premier et un second raccord de sortie (3, 4) pour le raccordement au convertisseur de mesure de pression différentielle,
- une première chambre (5) présentant a l'intérieur un premier dispositif d'arrêt en forme de soupape (7),
- qui obture de façon étanche dans une première position de fin de course (15) le premier raccord d'entrée (1),
- une seconde chambre (6) présentant à l'intérieur un second dispositif d'arrêt en forme de soupape (8),
- qui obture de façon étanche dans une seconde position de fin de course (16) le second raccord d'entrée (2),
- un premier canal (9) reliant la première chambre (5) au premier raccord de sortie (3),
- un second canal (10) reliant la première chambre (5) au second raccord de sortie (4),
canal (10) qui est obturé de manière étanche dans une troisième position de fin de course (17) du premier dispositif d'arrêt (7),
- un troisième canal (11) reliant la seconde chambre (6) au second raccord de sortie (4),
- un quatrième canal (12) reliant la seconde chambre (6) au premier raccord de sortie (3),
- canal (12) qui est obturé de manière étanche dans une quatrième position de fin de course (18) du second dispositif d'arrêt (8).

2. Batterie de soupapes selon la revendication 1, où les positions de fin de course (15, 16, 17, 18) sont réalisées comme des surfaces d'étanchéité tronconique auxquelles correspondent les surfaces d'étanchéité des dispositifs d'arrêt (7, 8) de forme tronconique adaptée.
